# EUROPEAN PATENT SPECIFICATION

(11) **EP 1 850 701 B1**
(45) Date of publication and mention of the grant of the patent: **02.04.2014**
(21) Application number: 06716582.9
(22) Date of filing: 23.01.2006
(51) Int. Cl.: A47C 9/10, A01K 97/22, E04G 1/24, B66F 11/04

(54) **DEVICE FOR SETTING UP A WORK PLATFORM ON AN UNEVEN GROUND SURFACE**
VORRICHTUNG ZUR ERRICHTUNG EINER ARBEITSPLATTFORM AUF EINER UNEBENEN BODENFLÄCHE
DISPOSITIF D'INSTALLATION D'UNE PLATE-FORME DE TRAVAIL SUR UNE SURFACE INEGALE

(30) Priority: 24.01.2005 NL 1028099; 22.03.2005 NL 1028587; 23.06.2005 NL 1029323; 26.08.2005 NL 1029815
(43) Date of publication of application: 07.11.2007
(73) Proprietor: Heledirn B.V., 3734 GZ Den Dolder (NL)
(72) Inventor: Fasseur, Dirk, 3734 GZ Den Dolder (NL); Meenks, Frederik, 3439 MS Nieuwegein (NL)
(74) Representative: Algemeen Octrooi- en Merkenbureau B.V.
(86) International application number: PCT/NL2006/000033
(87) International publication number: WO 2006/078160

(56) References cited:
- EP-A- 0 985 344
- DE-C- 926 324
- GB-A- 1 440 322
- GB-A- 2 219 771
- GB-A- 2 309 023
- US-A- 3 282 376
- US-A1- 2004 222 617

## Description

The invention relates to a device for setting up a work platform on an uneven ground surface, which device comprises setting means as well as a work platform to be set up on said ground surface by the setting means according to the preamble of the present claim 1.

It is noted that the invention can be used for all kinds of situations and applications in which a stable work platform, whether flat or not, is needed. Think in this connection of setting up a flat work platform in the outside air, for example when carrying out (maintenance) work outdoors on an uneven ground surface or when practising outdoor sports activities, such as camping and fishing.

Fishermen have a large amount of fishing-tackle and fishing materials, which must be transported to and from the fishing ground each time they go fishing. Fishermen prefer to install themselves and their equipment on a horizontal surface right beside the fishing water. So far, this has been done by interconnecting separate plates, rods and couplings they have taken with them to the fishing ground. Fishermen lose a lot of time installing their equipment, therefore, especially in those cases in which the fishing ground cannot easily be reached from the public road. A device of the above-mentioned type is described in GB 22 19771A.

The invention is aimed at providing a functional solution to the above problem, which enables the fisherman to install his fishing-tackle and fishing materials quickly in a more effective way and to practise his hobby at fishing grounds.

The object of the invention is to provide a device of the above kind which provides an additional functionality for the sport of angling, and according to the invention the device is characterized according to the characterizing features of claim 1.

Further advantageous embodiments of the device according to the invention as described in the dependent claims.

The invention will now be explained in more detail by means of an embodiment as illustrated in the drawing, in which:
Figures 1 a and 1 bare a side view and a rear view, respectively, of a first embodiment of a device according to the preamble of claim 1;
Figures 2 is a perspective view of the embodiment that is shown in figures 1a and 1b;
Figure 9 shows yet another embodiment of a device according to the invention.

For a better understanding of the invention, like parts are indicated by the same numerals in the description of the figures below.

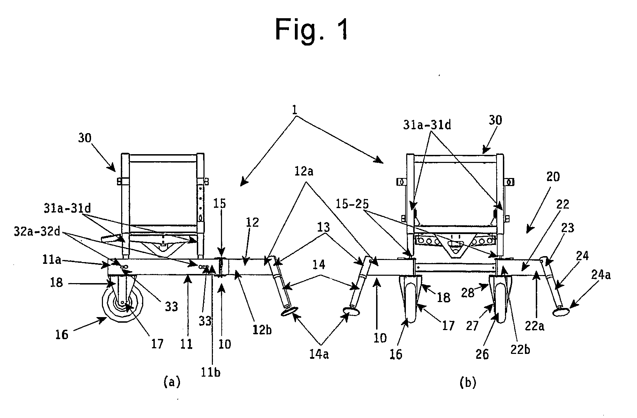

Figures 1a and 1b show two side views of a device 1 according to the preamble of claim 1.

The device according to the invention is very suitable for setting up a work platform on an uneven ground surface, said device comprising setting means as well as a work platform to be set up on the ground surface by the setting means. In figures 1a and 1b, the setting means are made up of two slightly spaced-apart sections 10-20, each section 10-20 being made up of two section members (11-12; 21-22) which are movable with respect to each other. A first section member 11 of each section 10-20 is provided with at least one supporting element (16-17-18; 26-27-28) near a first end 11a, and the other section member 12-22 is provided with at least one outrigger element 14 near its first end 12a-22a.

Furthermore, the two section members (11-12; 21-22) are interconnected with their two other ends (11b-12b; 21 b-22b). The connection between the two section members (11-12; 21-22) may be configured as a hinge 15-25 in that case.

As figure 1 clearly shows, the outrigger element 14 is adjustable for height. The outrigger element 14 may be movably accommodated in a sleeve 13-23 that is attached to the first end 12a-22a of the other section member 12-22. In this embodiment, the outrigger element 14 may be provided with external screw thread (not shown), which mates with internal peace (likewise not shown) in the sleeve 13-23.

In another embodiment, which is also shown in figure 1, each outrigger element 14-24 may be provided with a shoe 14a-24a for placement on an uneven, soft (boggy) ground surface (such as soft sandy water's edges). The shoe 14a-24a may or may not be vertically movable within the outrigger element 14-24 by means of screw thread.

In yet another embodiment (not shown), each outrigger element 14-24 is provided with a blunt end 14a-24a (without a shoe) for placement on a hard, uneven ground surface (such as a rocky bottom).

As is clearly shown in figures 1 a and 1b, the supporting elements 16-26 is configured as a wheel that is mounted in a fork construction 18-28, being rotatable about an axis 17-27. The fork construction 18-28 is in turn connected to the first end 11a-21 a of the first section member 11-21.

In another embodiment (not shown), the outrigger element in question may be substituted for another outrigger element of a different length.

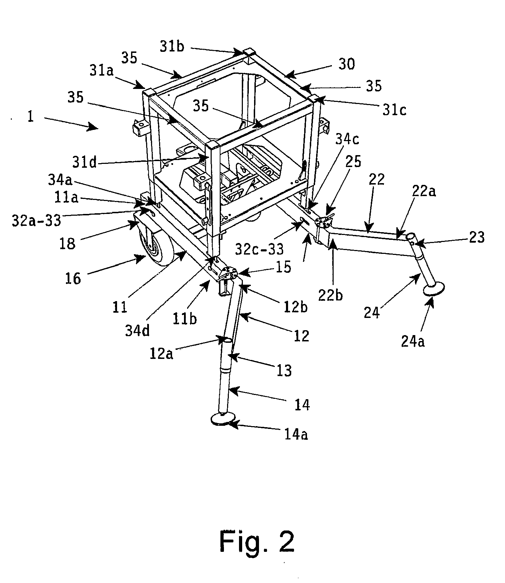

As is clearly shown in figure 2, the setting means 10-20 function to support a work platform on which an auxiliary device 30 can be placed. Said auxiliary device may be a storage box for tools, for example, or, as already mentioned in the introduction to this application, a storage box for fishing tackle. Furthermore, the auxiliary device may comprise a seat on which the user can seat himself.

The auxiliary device 30 is built up of a spatial construction of tubular elements 31a-31d-35, which is supported on the setting means 10-20 in four (corner) points. To that end, four cams or pins 34a-34d provided at each one of the ends of the elements 31a-31d extend into corresponding slots 32a-32d formed in the first section members 11 and 21, respectively. Each projecting cam/pin 34a-34d extending into each first section member 11-21 can be fixed in position by means of a locking pawl 33, so that the auxiliary device 30 of the device 1 is prevented from being moved undesirably.

The tubular elements 31a-31d-35 may be circular in section, but other sectional shapes are also possible, such as a square (as shown in the figures) or a rectangular shape.

This construction provides a stable and reliable possibility of setting up a work platform on an uneven ground surface and placing and fixing an auxiliary device, such as a storage box, on said work platform. The four locking pawls 33 that fix the auxiliary device 30 (the cams/pins 34a-34d) in position with respect to the device can be simultaneously and jointly released by means of an actuating element 40.

As a result, the two section members 10-20 of the device 1 can move in a vertical plane relative to each other for alignment with respect to the uneven ground surface, whilst at the same time the auxiliary device 30 can be pulled to a horizontal position with respect to the ground surface. The projecting cams/pins 34a-34d can move in horizontal as well as in vertical direction within the slots 32a-32d so as to achieve a correct, horizontal alignment.

When the actuating element 40 is operated again, the four locking pawls 33 are engaged again, so that the cams 32a-32d are locked in position and the auxiliary device 30 can no longer remove with respect to the chassis of the device (the sections 11-21). At the same time, the two sections 11-21 are fixed in position relative to each other as well, so that a solid alignment with respect to the ground surface is realised. Preferably, the actuating element 40 can be operated against a spring force, so that the locking pawls are engaged by simply releasing the actuating element 40 (after the element 40 has been pressed down and the locking pawls 33 have been released), whilst at the same time the two sections 11-21 are fixed in position relative to each other.

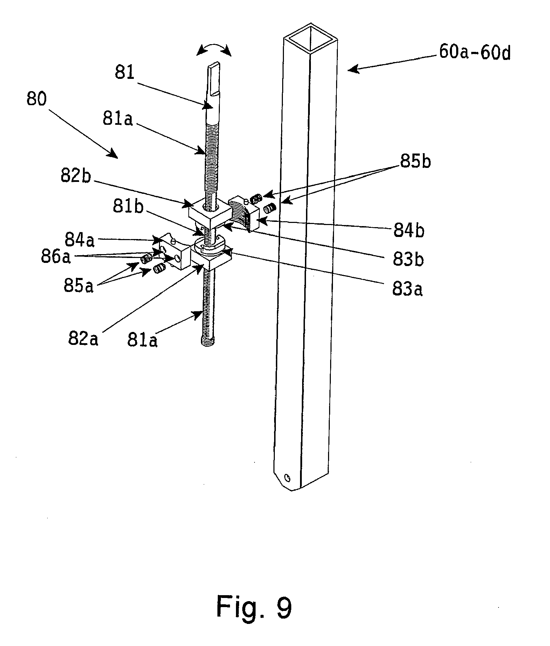

Figure 9 shows an embodiment of the means that couple the chassis 1' and the auxiliary device 30 together. The coupling means are configured as a spindle 81 comprising a portion 81 a and a narrower portion 81 b, which can be rotatably accommodated in a coupling guide 60a-60d. A cam surface 83a provided on a support or locking disc 82a-82b surrounds the narrowed portion 81 b. The varying cam surface 83a-83d preferably has a curved stop edge, which can be placed into contact with two stop elements 84a-84b that can be provided between the two locking discs 82a-82b. As figure 9 clearly shows, each stop element 84a-84b has a curved surface that faces towards the spindle 81, as well as a flat surface that faces towards an inner surface of the coupling guide 60a-60d. Rotation of the spindle 81 causes the cam surface 83a-83b to rotate as well (for example a quarter of a turn), as a result of which the stop element 84a-84b that is in contact with the cam surface, and in particular the curved surface thereof that faces towards the spindle 81, can be moved to a position between a first position and the second position.

In the first position, the flat contact surface of the stop element 84a-84b is clear of a flat inner surface of the coupling guide 60a-60d. In the second position, the stop element 84a-84b is moved to a second position by the curved cam surface 83a-83b, in which position the flat contact surface of the stop element 84a-84b is pressed against an inner surface of the coupling guide 60a-60d, thus clamping down or fixing the spindle 81 and the auxiliary device that is connected thereto in position.

To ensure that the spindle is properly retained, especially in order to ensure and adequate release when the spindle is being returned from the second operating position tot the first operating position, spring elements 85a-85b are provided between the stop element 84a-84b and an inner wall of the coupling guide 60a-60d.

In a special embodiment, as shown in figure 9, the spring elements 85a-85b are configured as springs accommodated in openings 86a-86b in the flat surface that faces towards an inner surface of the coupling guide 60a-60d. The spring elements 85a-85b function to return the stop elements 84a-84b from their second position, in which they clampingly engage the inner wall of the coupling guide 60a-60d, to the first position, in which they are positioned clear of the inner wall of the coupling guide. In this way the chassis 1 and the auxiliary device 30 can be locked together or be disconnected from each other in an effective manner by rotating the spindle 81.
As already noted in the introduction, however, the invention is not limited to the application thereof in the sport of angling, but it can also be used in other situations or for other applications in which a flat work platform on an even ground surface is required.

## Claims

1. A device (1) for setting up a work platform on an uneven ground surface, which device comprises setting means as well as a work platform to be set up on said ground surface by the setting means, said setting means comprise two slightly spaced-apart sections (10; 20), each section being made up of two section members (11-12; 21-22) wherein the section members (11-12; 21-22) of each section (10; 20) are movable with respect to each other, a first section member (11; 21) of each section being provided with at least one supporting element (16-17-18; 26-27-28) near a first end (11a; 21a) thereof and the other section member (12; 22) being provided with at least one outrigger element (14a; 24a) near its first end (12a; 22a), the first section member and the other section member of each section being interconnected with their respective other ends, the device further comprising an auxiliary device, wherein during use the auxiliary device (30) is placed on the section members which auxiliary device renders the device suitable for all kinds of outdoor applications and wherein both the section members (11-21) and the auxiliary device (30) are provided with mating coupling elements (60a-60d; 31a-31d; 80), **characterized in that** each coupling element (80) on the auxiliary device (30) comprise a spindle (81) which can be rotatably accommodated in a corresponding, mating coupling guide (60a-60d) mounted on the section members (11-21), which spindle is rotatable between a first position and a second position, wherein said coupling element (80) also comprises a stop element (84a-84b) that mates with the corresponding spindle, which stop element (84a-84b) is clear of the corresponding, mating coupling guide in the first position and wherein the stop element clampingly engages the corresponding, mating coupling guide in the second position.

2. A device according to claim 1, **characterized in that** the spindle comprises a varying cam surface (83a-83d) that engages the stop element (84a-84b), which cam surface functions to move the stop element to the first and the second position.

3. A device according to claim 1 or 2, **characterized in that** the stop element (84a-84b) comprises a flat contact surface that faces towards the coupling guide (60a-60d).

4. A device according to claim 3, **characterized in that** spring elements (85a-85b) are provided between the contact surface that faces towards the coupling guide (60a-60d) and the coupling guide.

5. A device according to claim 4, **characterized in that** spring elements (85a-85b) can be accommodated at least in part in openings (86a-86d) formed in the contact surface of the stop element (84a-84b) that faces towards the coupling guide.

6. A device according to any one or more of the claims 1-5, **characterized in that** the stop element (84a-84b) comprises a curved contact surface that faces towards the spindle (81).

## Patentansprüche

1. Vorrichtung (1) zur Errichtung einer Arbeitsplattform auf einer unebenen Bodenoberfläche, wobei die Vorrichtung Einstellmittel sowie eine von den Einstellmitteln auf der Bodenoberfläche zu errichtende Arbeitsplattform umfasst, wobei die Einstellmittel zwei geringfügig voneinander beabstandete Abschnitte (10; 20) umfassen, wobei jeder Abschnitt aus zwei Abschnittsteilen (11-12; 21-22) besteht, wobei die Abschnittsteile (11-12; 21-22) jedes Abschnitts (10; 20) relativ zueinander beweglich sind, wobei ein erstes Abschnittsteil (11; 21) jedes Abschnitts in der Nähe seines ersten Endes (11a; 21a) mit wenigstens einem Abstützelement (16-17-18; 26-27-28) versehen ist und das andere Abschnittsteil (12; 22) in der Nähe seines ersten Endes (12a; 22a) mit wenigstens einem Abstützfußelement (14a; 24a) versehen ist, wobei das erste Abschnittsteil und das andere Abschnittsteil jedes Abschnitts mit ihrem jeweiligen anderen Ende miteinander verbunden sind, wobei die Vorrichtung ferner eine Hilfsvorrichtung umfasst, wobei die Hilfsvorrichtung (30) während des Gebrauchs auf die Abschnittsteile aufgesetzt wird, wobei die Hilfsvorrichtung die Vorrichtung für alle Arten von Anwendungen im Freien geeignet macht und wobei sowohl die Abschnittsteile (11-21) als auch die Hilfsvorrichtung (30) mit zueinander passenden Kupplungselementen (60a-60d; 31a-31d; 80) versehen sind, **dadurch gekennzeichnet, dass** jedes Kupplungselement (80) an der Hilfsvorrichtung (30) eine Spindel (81) umfasst, die in einer entsprechenden, dazu passenden Kupplungsführung (60a-60d) verdrehbar aufgenommen werden kann, die an den Abschnittsteilen (11-21) angebracht ist, wobei die Spindel zwischen einer ersten Stellung und einer zweiten Stellung verdrehbar ist, wobei das Kupplungselement (80) auch ein Anschlagelement (84a-84b) umfasst, das mit der entsprechenden Spindel zusammenpasst, wobei das Anschlagelement (84a-84b) in der ersten Stellung die entsprechende, dazu passende Kupplungsführung nicht berührt und wobei das Anschlagelement in der zweiten Stellung klemmend an der entsprechenden, dazu passenden Kupplungsführung anliegt.

2. Vorrichtung nach Anspruch 1, **dadurch gekennzeichnet, dass** die Spindel eine sich verändernde Nockenfläche (83a-83d) umfasst, die an dem Anschlagelement (84a-84b) angreift, wobei die Nockenfläche dazu dient, das Anschlagelement in die erste und die zweite Stellung zu bewegen.

3. Vorrichtung nach Anspruch 1 oder 2, **dadurch gekennzeichnet, dass** das Anschlagelement (84a-84b) eine ebene Kontaktfläche umfasst, die der Kupplungsführung (60a-60d) zugewandt ist.

4. Vorrichtung nach Anspruch 3, **dadurch gekennzeichnet, dass** zwischen der der Kupplungsführung (60a-60d) zugewandten Kontaktfläche und der Kupplungsführung Federelemente (85a-85b) vorgesehen sind.

5. Vorrichtung nach Anspruch 4, **dadurch gekennzeichnet, dass** Federelemente (85a-85b) wenigstens zum Teil in Öffnungen (86a-86d) aufgenommen sein können, die in der Kontaktfläche des Anschlagelements (84a-84b) gebildet sind, die der Kupplungsführung zugewandt ist.

6. Vorrichtung nach einem oder mehreren der Ansprüche 1-5, **dadurch gekennzeichnet, dass** das Anschlagelement (84a-84b) eine gekrümmte Kontaktfläche umfasst, die der Spindel (81) zugewandt ist.

## Revendications

1. Dispositif (1) pour installer une plate-forme de travail sur une surface de sol irrégulière, lequel dispositif comprend des moyens de réglage ainsi qu'une plate-forme de travail devant être installée sur ladite surface de sol par les moyens de réglage, lesdits moyens de réglage comprennent deux sections légèrement espacées l'une de l'autre (10 ; 20), chaque section étant composée de deux organes de section (11-12 ; 21-22), dans lequel les organes de section (11-12 ; 21-22) de chaque section (10 ; 20) sont mobiles l'un par rapport à l'autre, un premier organe de section (11 ; 21) de chaque section étant pourvu d'au moins un élément de support (16-17-18 ; 26-27-28) près d'une première extrémité (11a ; 21a) de celui-ci et l'autre organe de section (12 ; 22) étant pourvu d'au moins un élément stabilisateur (14a ; 24a) près de sa première extrémité (12a ; 22a), le premier organe de section et l'autre organe de section de chaque section étant raccordés mutuellement avec leurs autres extrémités respectives, le dispositif comprenant en outre un dispositif auxiliaire, dans lequel, durant l'utilisation, le dispositif auxiliaire (30) est positionné sur les organes de section, lequel dispositif auxiliaire rend le dispositif approprié pour tous les types d'applications en environnement extérieur et dans lequel les organes de section (11-21) et le dispositif auxiliaire (30) sont pourvus d'éléments d'accouplement complémentaires (60a-60d ; 31a-31d ; 80), **caractérisé en ce que** chaque élément d'accouplement (80) sur le dispositif auxiliaire (30) comprend une broche (81) qui peut être logée de façon rotative dans un guidage d'accouplement complémentaire correspondant (60a-60d) monté sur les organes de section (11-21), laquelle broche est rotative entre une première position et une seconde position, dans lequel ledit élément d'accouplement (80) comprend également un élément de butée (84a-84b) qui complète la broche correspondante, lequel élément de butée (84a-84b) est dégagé du guidage d'accouplement complémentaire correspondant dans la première position et dans lequel l'élément de butée entre en prise à serrage avec le guidage d'accouplement complémentaire correspondant dans la seconde position.

2. Dispositif selon la revendication 1, **caractérisé en ce que** la broche comprend une surface à came variée (83a-83d) qui entre en prise avec l'élément de butée (84a-84b), laquelle surface à came sert à déplacer l'élément de butée vers la première et la seconde position.

3. Dispositif selon la revendication 1 ou 2, **caractérisé en ce que** l'élément de butée (84a-84b) comprend une surface de contact plate qui est orientée vers le guidage d'accouplement (60a-60d).

4. Dispositif selon la revendication 3, **caractérisé en ce que** des éléments à ressort (85a-85b) sont prévus entre la surface de contact qui est orientée vers le guidage d'accouplement (60a-60d) et le guidage d'accouplement.

5. Dispositif selon la revendication 4, **caractérisé en ce que** les éléments à ressort (85a-85b) peuvent être logés au moins en partie dans des ouvertures (86a-86d) formées dans la surface de contact de l'élément de butée (84a-84b) qui est orientée vers le guidage d'accouplement.

6. Dispositif selon l'une ou plusieurs quelconques des revendications 1 à 5, **caractérisé en ce que** l'élément de butée (84a-84b) comprend une surface de contact incurvée qui est orientée vers la broche (81).
